# EUROPEAN PATENT APPLICATION

(11) **EP 4 848 347 A1**
(43) Date of publication of application: **02.12.2026**
(21) Application number: 25744471.1
(22) Date of filing: 10.01.2025
(51) Int. Cl.: H01M 4/13, H01M 4/04, H01M 10/058

(54) **ELECTRODE SHEET, ELECTRODE ASSEMBLY AND BATTERY**

(30) Priority: 26.01.2024 CN 202410111591
(71) Applicant: Ningde Amperex Technology Limited, Ningde, Fujian 352100 (CN)
(72) Inventor: LIU, Wei, Ningde, Fujian 352100 (CN); LI, Xiaolong, Ningde, Fujian 352100 (CN)
(74) Representative: Dehns Germany Partnerschaft mbB
(86) International application number: PCT/CN2025/071835
(87) International publication number: WO 2025/157028

(57) **Abstract**

An electrode sheet (300), an electrode assembly, and a battery are disclosed. The electrode sheet (300) includes a first surface perpendicular to a thickness direction of the electrode sheet (300), where the first surface includes a protruding point region (310), the protruding point region (310) being formed with multiple first protruding portions (311); and the protruding point region (310) is spaced from an edge of the first surface, an area of the protruding point region (310) is denoted as Y, a projected area of the first surface in a direction perpendicular to the thickness direction of the electrode sheet (300) is denoted as E, and E and Y satisfy: 0.1 ≤ Y/E ≤ 0.98, facilitating an appropriate area proportion for the multiple first protruding portions (311). The first protruding portions (311) can provide effective support for a separator (50), enabling the multiple first protruding portions (311) to effectively buffer winding stress during the winding process of the electrode assembly and swelling forces due to electrode assembly swelling, improving the electrolyte wetting effect for the electrode assembly, alleviating the interface issue of the electrode, and improving the cycling performance of the battery when the electrode sheet (300) is applied in a battery.

## Description

### CROSS-REFERENCE TO RELATED APPLICATIONS

This application claims priority to Chinese Patent Application No. 202410111591.3, filed with the China National Intellectual Property Administration on January 26, 2024 and entitled "ELECTRODE SHEET, ELECTRODE ASSEMBLY, AND BATTERY," the entire contents of which are incorporated herein by reference.

### TECHNICAL FIELD

This application relates to the technical field of chemical apparatuses, and in particular, to an electrode sheet, an electrode assembly, and a battery.

### BACKGROUND

Cycle life is a critical performance metric for lithium-ion batteries, and prolonging cycle life is a long-term and ongoing research direction. In addition to optimizing and innovating battery materials to prolong the cycle life, structural design and improvements can also effectively contribute to it. This places higher design requirements on the winding method of the electrode assembly in cells.

### SUMMARY

The inventors have found that interlayer squeezing exists within the electrode assembly, including squeezing between corner segments and straight segments. Particularly during battery charging and discharging, the electrode assembly swells, further intensifying the squeezing. This leads to insufficient electrolyte between layers, poor wetting, and a tendency for interface degradation, potentially resulting in abnormalities such as poor wetting or cycling failure.

Embodiments of this application provide an electrode sheet, an electrode assembly, and a battery, which can mitigate the interlayer squeezing issue in the electrode assembly.

According to a first aspect, an embodiment of this application provides an electrode sheet for a battery, where the electrode sheet includes a first surface perpendicular to a thickness direction of the electrode sheet, the first surface including a protruding point region, and the protruding point region being formed with multiple first protruding portions;
where the protruding point region is spaced from an edge of the first surface, an area of the protruding point region is denoted as Y, a projected area of the first surface in a direction perpendicular to the thickness direction of the electrode sheet is denoted as E, and E and Y satisfy: 0.1 ≤ Y/E ≤ 0.98, preferably 0.3 ≤ Y/E ≤ 0.9, and more preferably 0.5 ≤ Y/E ≤ 0.9.

In some exemplary embodiments, the first surface includes an end clearance region and an edge clearance region, where the end clearance region is connected to an end of the protruding point region in a length direction of the electrode sheet and extends to an edge of the electrode sheet, and the edge clearance region is disposed on one side of the protruding point region in a width direction of the electrode sheet and extends to an edge of the electrode sheet.

In some exemplary embodiments, the electrode sheet includes a first edge and a second edge oppositely disposed in the length direction of the electrode sheet, and the protruding point region includes a first boundary and a second boundary oppositely disposed in the length direction of the electrode sheet, where the first boundary corresponds to the first edge, and the second boundary corresponds to the second edge; and
the end clearance region includes a head clearance region and a tail clearance region, where the head clearance region is formed between the first edge and the first boundary, the tail clearance region is formed between the second edge and the second boundary, and the electrode sheet is configured to be wound with a separator along the length direction of the electrode sheet from the head clearance region to form a flat electrode body.

In some exemplary embodiments, an area of the head clearance region is denoted as A, an area of the tail clearance region is denoted as D, and the electrode sheet satisfies at least one of the following conditions: $0 \leq A / E \leq 0.3 ,$ (1) preferably 0 ≤ A ≤ 0.1E; or $0.06 \leq D / E \leq 0.6 .$ (2)

In some exemplary embodiments, the electrode sheet includes a third edge and a fourth edge oppositely disposed in the width direction of the electrode sheet, and the protruding point region includes a third boundary and a fourth boundary oppositely disposed in the width direction of the electrode sheet, where the third boundary corresponds to the third edge, and the fourth boundary corresponds to the fourth edge; and
the edge clearance region includes a first region and a second region, where the first region is formed between the third boundary and the third edge, the second region is formed between the fourth boundary and the fourth edge, and the first region and the second region extend in the length direction of the electrode sheet to connect to the end clearance region.

In some exemplary embodiments, an area of the first region is denoted as S1, and a dimension of the first region in the width direction of the electrode sheet is denoted as T11; an area of the second region is denoted as S2, and a dimension of the first region in the width direction of the electrode sheet is denoted as T12; and the electrode sheet satisfies at least one of the following conditions: $0.01 \leq S 1 / E \leq 0.4 ;$ I. $0.01 \leq S 2 / E \leq 0.4 ;$ II. $0.9 \leq S 2 / S 1 \leq 1.1 ;$ III. $1 mm \leq T 11 \leq 30 mm ;$ IV. or $1 mm \leq T 12 \leq 30 mm .$ V.

In some exemplary embodiments, the protruding point region includes a third boundary and a fourth boundary oppositely disposed in the width direction of the electrode sheet; and
the first surface further includes a tab region, where the tab region extends from the third boundary toward a side where the fourth boundary is located, the tab region is used for accommodating at least one tab assembly, the tab assembly including at least one of a tab and a protective adhesive, and the tab assembly is spaced from the protruding point region; where being spaced in this application means there is a distance.

The number of tab regions on the same electrode sheet is at least one, and an area of each tab region is denoted as M, M satisfying: 0.01 ≤ M/E ≤ 0.2.

In some exemplary embodiments, the number of tab regions on the same electrode sheet is multiple, where the tab region includes a tab mounting region and a protective adhesive mounting region, the tab mounting region is used for accommodating a tab, and the protective adhesive mounting region is used for accommodating a protective adhesive; an area of the tab mounting region is denoted as B, and an area of the protective adhesive mounting region is denoted as C; and the electrode sheet satisfies at least one of the following conditions: $0.01 \leq B / E \leq 0.2 ;$ a. or $0.01 \leq C / E \leq 0.2 .$ b.

In some exemplary embodiments, the tab region is spaced from the fourth boundary; or, the tab region extends from the third boundary through the protruding point region along the width direction of the electrode sheet.

In some exemplary embodiments, the electrode sheet is configured to be wound with a separator along the length direction of the electrode sheet for multiple turns to form an electrode body; each turn of the electrode sheet includes a straight segment and corner segments disposed at both ends of the straight segment; and in the length direction of the electrode sheet, a dimension of the corner segment is denoted as W5, and a dimension of the protruding point region is denoted as W6; where
the protruding point region is disposed at the corner segment, where W6 = W5; or,
the protruding point region is disposed at the corner segment and extends to the straight segment, and two protruding point regions of a same turn of the electrode sheet are spaced from each other, where W6 > W5.

In some exemplary embodiments, the electrode sheet includes a current collector and an active material layer; and the current collector includes a main body portion and a blank foil portion, where the blank foil portion is integrally formed with the main body portion, multiple tabs are formed on the blank foil portion, the active material layer is disposed on a surface of the main body portion, and a surface of the active material layer facing away from the main body portion forms the first surface.

In some exemplary embodiments, the electrode sheet includes a current collector and an active material layer, where the active material layer is disposed on a surface of the current collector; and the first protruding portion is formed by bending a portion of the current collector and a portion of the active material layer toward a same side, the portion of the current collector used to form the first protruding portion is a protruding portion base, the protruding portion base has a first outer peripheral edge line, and the first outer peripheral edge line has a first circumscribed circle;
two adjacent protruding portion bases have a first spacing L1 and a second spacing L2, where the first spacing L1 is a distance in the length direction of the electrode sheet between centers of the first circumscribed circles of the first outer peripheral edge lines of the two adjacent protruding portion bases, and the second spacing L2 is a distance in the width direction of the electrode sheet between centers of the first circumscribed circles of the first outer peripheral edge lines of the two adjacent protruding portion bases; and
L1 satisfies: 0.5 mm ≤ L1 ≤ 40 mm; and/or, L2 satisfies: 0.5 mm ≤ L2 ≤ 40 mm.

According to a second aspect, an embodiment of this application provides an electrode assembly, including multiple tab assemblies, the electrode sheet as described above, and a separator disposed between two electrode sheets, where the separator and the two electrode sheets are wound along the length direction of the electrode sheet to form a flat electrode body.

In some exemplary embodiments, the tab assembly is spaced from the protruding point region; and the tab assembly includes a tab and a protective adhesive, the tab includes a connecting segment connected to the electrode sheet and a mating segment extending beyond an edge of the electrode sheet, and a surface of the connecting segment facing away from the electrode sheet is provided with multiple second protruding portions.

According to a third aspect, an embodiment of this application provides a battery, including a housing and the electrode assembly as described above, where the electrode assembly is disposed in an internal space of the housing.

Based on the electrode sheet, electrode assembly, and battery provided by embodiments of this application, setting the proportion of the protruding point region on the first surface to be in the range of 0.1 to 0.98 makes it convenient to set an appropriate area proportion for the multiple first protruding portions. The first protruding portions can provide effective support for the separator, enabling the multiple first protruding portions to effectively buffer winding stress during the winding process of the electrode assembly and swelling forces due to electrode assembly swelling, improving the electrolyte wetting effect for the electrode assembly, alleviating the interface issue of the electrode, and improving the cycling performance of the battery when the electrode sheet is applied in a battery.

### BRIEF DESCRIPTION OF DRAWINGS

To more clearly illustrate the technical solutions in some embodiments of this application or in the prior art, the drawings required for describing these embodiments or the prior art are briefly introduced below. It is apparent that the drawings described below are merely some embodiments of this application, and those skilled in the art can obtain other drawings based on these drawings without creative effort.
FIG. 1 is a schematic diagram of an unfolded structure of an electrode sheet with a tab assembly mounted in a first region according to an embodiment of this application;
FIG. 2 is a schematic diagram of a jelly-roll structure of an electrode body according to an embodiment of this application;
FIG. 3 is a schematic structural diagram of a tab region being spaced from a fourth boundary according to an embodiment of this application;
FIG. 4 is a schematic structural diagram of an electrode sheet with a tab region extending through a protruding point region according to an embodiment of this application;
FIG. 5 is a schematic diagram of an unfolded structure of an electrode sheet with a protruding point region located at a corner segment according to an embodiment of this application;
FIG. 6 is a schematic diagram of an unfolded structure of an electrode sheet with a gradually increasing width of a protruding point region according to an embodiment of this application;
FIG. 7 is a schematic structural diagram of first protruding portions of a protruding point region gradually decreasing in size from a central region to an edge region according to an embodiment of this application;
FIG. 8 is a schematic diagram of a partial cross-sectional structure of an electrode sheet according to an embodiment of this application;
FIG. 9 is a schematic diagram of an unfolded structure of an electrode sheet when a coating portion and a blank foil portion of a current collector are integrally formed according to an embodiment of this application; and
FIG. 10 is a schematic structural diagram of a tab assembly mounted on an electrode sheet with second protruding portions according to an embodiment of this application.

Description of reference signs of drawings:
20. electrode body; 21. straight segment; 22. corner segment; 100. tab; 110. second protruding portion; 200. protective adhesive; 40. tab assembly; 50. separator;
300. electrode sheet; 310. protruding point region; 311. first protruding portion; 312. main body portion; 320. tab region; 321. tab mounting region; 322. protective adhesive mounting region; 330. end clearance region; 3201. first side boundary; 3202. second side boundary; 3203. bottom boundary; 3204. third side boundary; 3205. fourth side boundary; 331. head clearance region; 332. tail clearance region; 410. positive electrode sheet; 420. negative electrode sheet;
3411. first edge; 3421. second edge; 3431. third edge; 3441. fourth edge;
301. protruding point boundary line; 3101. first boundary; 3102. second boundary; 3103. third boundary; 3104. fourth boundary; 500. current collector; 510. coating portion; 520. blank foil portion;
340. edge clearance region; 341. first region; 342. second region;
X. length direction; Y. width direction; and Z. thickness direction.

### DETAILED DESCRIPTION

To make the objectives, technical solutions, and advantages of this application clearer, this application is further described in detail below with reference to the drawings and embodiments. It should be understood that the specific embodiments described here are only used to explain this application and are not intended to limit this application.

The inventors have found that during battery charging and discharging, the electrode assembly swells, and squeezing at the corner segments of the electrode assembly is further intensified, leading to insufficient electrolyte at the corner segments, poor wetting, and a tendency for interface degradation, potentially resulting in cycling failure.

The inventors have also found that during the processing of the electrode assembly, a positive electrode sheet, a separator, and a negative electrode sheet sequentially in layers for multiple turns are wound to form an electrode body with multiple winding units. By increasing the spacing between adjacent winding units and providing protruding portions on the electrode sheet to support adjacent winding units, the squeezing issue caused by electrode assembly swelling can be mitigated. However, if the protruding portions are improperly positioned, the supporting force of the protruding portions may be insufficient, still resulting in negative issues such as electrode sheet interface issue and insufficient electrolyte, with suboptimal improvement effects.

Based on this, embodiments of this application provide an electrode sheet, an electrode assembly, and a battery, with a protruding portion distribution design to effectively improve the electrolyte wetting effect and alleviating the electrode sheet interface issues.

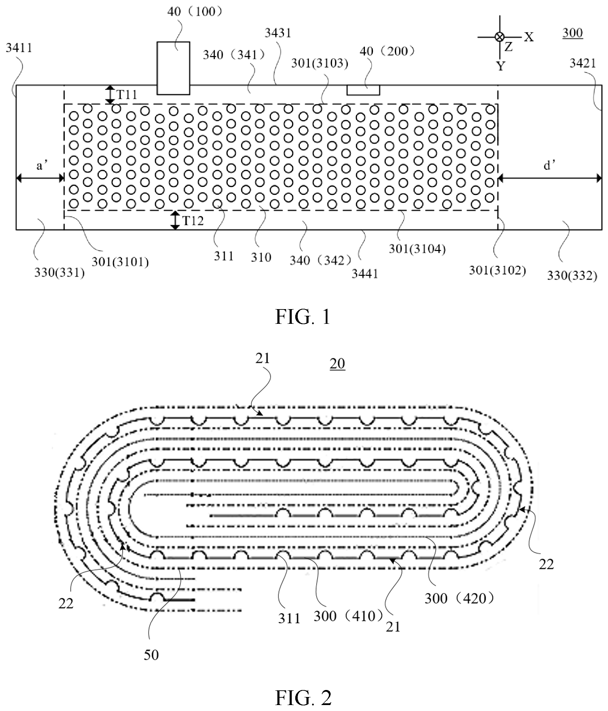

As shown in FIG. 1, a front view of a schematic structure of an electrode sheet 300 in an unfolded state according to an embodiment of this application is provided, where the electrode sheet 300 has a length direction X, a width direction Y, and a thickness direction Z, which are pairwise perpendicular. The electrode sheet 300 is used in an electrode assembly, as shown in FIG. 2, which is a schematic structural diagram of an electrode assembly according to an embodiment of this application. The electrode assembly includes two electrode sheets 300 with opposite polarities and a separator 50, where the two electrode sheets 300 with opposite polarities are consistent in the length direction X, the width direction Y, and the thickness direction Z, and the separator 50 is disposed between the two electrode sheets 300 with opposite polarities in the thickness direction Z of the electrode sheet 300. One of the two electrode sheets 300 with opposite polarities is a positive electrode sheet 410, and the other is a negative electrode sheet 420. The separator 50 is insulating and used to separate the positive electrode sheet 410 and the negative electrode sheet 420 to prevent short circuits between the positive electrode sheet 410 and the negative electrode sheet 420.

The separator 50 and the two electrode sheets 300 are wound along the length direction X of the electrode sheet 300 for multiple turns to form an electrode body 20, where the length direction X of the electrode sheet is the direction for winding the electrode sheet, and the width direction Y is perpendicular to the length direction X. The electrode body 20 is flat, and each turn of the electrode sheet 300 includes two straight segments 21 and two corner segments 22, where the two straight segments 21 are oppositely disposed in a direction perpendicular to the sheet surface of the straight segments 21, the two straight segments 21 are disposed between the two corner segments 22 in a direction parallel to the sheet surface of the straight segments 21, and the two straight segments 21 and the two corner segments 22 are sequentially connected end-to-end. Squeezing is likely to occur between the corner segments 22 of adjacent turns of the electrode sheet 300, and squeezing also exists between the straight segment 21 and the corner segment 22 of each turn of the electrode sheet 300. Therefore, the corner segments 22 are high-risk regions for squeezing in the electrode body 20. When squeezing occurs at the corner segments 22, it is prone to issues such as insufficient electrolyte and poor wetting, leading to interface degradation at the corner segments 22 and potentially cycling failure.

The electrode sheet 300 includes a first surface perpendicular to the thickness direction Z of the electrode sheet 300, as shown in FIG. 1, where the first surface includes a protruding point region 310, the protruding point region 310 being formed with multiple first protruding portions 311, and the protruding point region 310 is spaced from an edge of the first surface. Each first protruding portion 311 protrudes in the thickness direction Z of the electrode sheet 300. After the two electrode sheets 300 and the separator 50 are wound for multiple turns to form the electrode body 20, the first protruding portions 311 contact the separator 50, providing support for the separator 50. When the electrode body 20 swells, the first protruding portions 311 can still support the separator 50. The contact area between the first protruding portions 311 and the separator 50 is small, allowing a space between the portion of the electrode sheet 300 corresponding to the protruding point region 310 and the separator 50 to accommodate electrolyte, and preventing abnormalities such as insufficient electrolyte or poor wetting between the electrode sheet 300 and the separator 50 due to swelling-induced squeezing.

Both the straight segments 21 and the corner segments 22 have first protruding portions 311, enabling support for the separator 50 corresponding to both the straight segments 21 and the corner segments 22. Optionally, all first protruding portions 311 on a single electrode sheet 300 protrude in the thickness direction Z of the electrode sheet 300 toward a same side of the electrode sheet 300. For example, the first protruding portions 311 disposed at the straight segment 21 protrude toward a side where a winding center of the electrode body 20 is located, and the first protruding portions 311 disposed at the corner segment 22 protrude toward the side where the winding center of the electrode body 20 is located; or, the first protruding portions 311 disposed at the straight segment 21 protrude toward a side facing away from the winding center of the electrode body 20, and the first protruding portions 311 disposed at the corner segment 22 protrude toward the side facing away from the winding center of the electrode body 20. Optionally, some first protruding portions 311 on a single electrode sheet 300 protrude in the thickness direction Z of the electrode sheet 300 toward one side of the electrode sheet 300, while other first protruding portions 311 protrude in the thickness direction Z of the electrode sheet 300 toward the other side of the electrode sheet 300. For example, the first protruding portions 311 disposed at the straight segment 21 protrude toward the side where the winding center of the electrode body 20 is located, and the first protruding portions 311 disposed at the corner segment 22 protrude toward the side facing away from the winding center of the electrode body 20; or, the first protruding portions 311 disposed at the straight segment 21 protrude toward the side facing away from the winding center of the electrode body 20, and the first protruding portions 311 disposed at the corner segment 22 protrude toward the side where the winding center of the electrode body 20 is located.

The above is merely an exemplary description, and this application does not limit the orientation of the first protruding portions 311 of each electrode sheet 300, which can be selected based on actual needs.

As shown in FIG. 1, the protruding point region 310 is defined by a protruding point boundary line 301, where the first protruding portions 311 of the protruding point region 310 may be located within an internal region defined by the protruding point boundary line 301, or the first protruding portions 311 may be inscribed within the protruding point boundary line 301. An area of the protruding point region 310 is denoted as Y, a projected area of the first surface in a direction perpendicular to the thickness direction Z of the electrode sheet 300 is denoted as E, and E and Y satisfy: 0.1 ≤ Y/E ≤ 0.98, for example, Y/E may be 0.1, 0.3, 0.4, 0.5, 0.6, 0.8, 0.98, or any range composed of any two of these values. Setting the proportion of the protruding point region 310 on the first surface to be in the range of 0.1 to 0.98 makes it convenient to set an appropriate area proportion for the multiple first protruding portions 311. The first protruding portions 311 can provide effective support for the separator 50, enabling the multiple first protruding portions 311 to effectively buffer winding stress during the winding process of the electrode assembly and swelling forces due to electrode assembly swelling, improving the electrolyte wetting effect for the electrode assembly, alleviating the interface issue of the electrode sheet 300, and improving the cycling performance of the battery when the electrode sheet 300 is applied in a battery.

Preferably, E and Y satisfy: 0.3 ≤ Y/E ≤ 0.9, where within this region proportion range, the electrode sheet 300 applied in a battery better improves the cycling performance of the battery.

As shown in FIG. 1, the first surface includes an end clearance region 330 and an edge clearance region 340, where the end clearance region 330 is connected to an end of the protruding point region 310 in a length direction X of the electrode sheet 300 and extends to an edge of the electrode sheet 300, and the edge clearance region 340 is disposed on one side of the protruding point region 310 in a width direction Y of the electrode sheet 300 and extends to an edge of the electrode sheet 300. Neither the edge clearance region 340 nor the end clearance region 330 is provided with first protruding portions 311. After two electrode sheets 300 and the separator 50 are wound, the surface of the electrode sheet 300 corresponding to the edge clearance region 340 and the end clearance region 330 may be spaced from the separator 50.

The end clearance region 330 is disposed at an end of the protruding point region 310 in the length direction X of the electrode sheet 300 and extends to an edge of the electrode sheet 300, and the end clearance region 330 also extends to an edge of the electrode sheet 300 in the width direction Y of the electrode sheet 300. As shown in FIG. 1, the end clearance region 330 includes at least one of a head clearance region 331 and a tail clearance region 332, preferably, the end clearance region 330 includes both the head clearance region 331 and the tail clearance region 332. In the length direction X of the electrode sheet 300, the head clearance region 331 is disposed at one end of the protruding point region 310, and the tail clearance region 332 is disposed at the other end of the protruding point region 310.

After the two electrode sheets 300 and the separator 50 are wound, the head clearance region 331 may be located in the innermost few turns of the electrode body 20, facilitating the winding and formation of the electrode body 20 and contributing to improving the structural stability of the central region of the electrode body 20. The tail clearance region 332 may be located in the outermost few turns of the electrode body 20, and the tail clearance region 332 may serve as a buffer region between the first protruding portions 311 and the tail end of the electrode body 20, allowing the portion of the electrode sheet 300 corresponding to the end clearance region 330 to more smoothly constrain the inner structure of the electrode body 20, contributing to improving the encapsulation stability of the electrode body 20. Particularly when the electrode body 20 has a tendency to swell, using the tail clearance region 332 without first protruding portions 311 for termination can prevent slippage at the tail end of the electrode body 20 due to swelling stress, improving the structural stability of the electrode body 20.

Specifically, the first surface of the electrode sheet 300 includes a first edge 3411 and a second edge 3421 oppositely disposed in the length direction X of the electrode sheet 300, and the protruding point region 310 includes a first boundary 3101 and a second boundary 3102 oppositely disposed in the length direction X of the electrode sheet 300, where the first boundary 3101 corresponds to the first edge 3411, and the second boundary 3102 corresponds to the second edge 3421. The head clearance region 331 is formed between the first edge 3411 and the first boundary 3101, and the tail clearance region 332 is formed between the second edge 3421 and the second boundary 3102. One end of the separator 50 is aligned with the head clearance region 331 or extends beyond the head clearance region 331 to be sandwiched between two electrode sheets 300 of opposite polarities. The electrode sheet 300 is wound with the separator 50 along the length direction X of the electrode sheet 300 from the head clearance region 331 to form a flat electrode body 20, such that the head clearance region 331 is located in the inner turns of the electrode body 20, and the tail clearance region 332 is located in the outer turns of the electrode body 20. The other end of the separator 50 extends beyond the tail clearance region 332 in the winding direction of the electrode sheet 300 to prevent short circuits between the two electrode sheets 300 of opposite polarities due to shrinkage of the separator 50.

An area of the tail clearance region 332 is denoted as D, where D and E satisfy: 0.06 ≤ D/E ≤ 0.6, for example, D/E may be 0.06, 0.1, 0.2, 0.3, 0.5, 0.6, or any range composed of any two of these values. Setting D/E in the range of 0.06 to 0.6 facilitates improvement of the connection stability at the tail end of the electrode body 20, enabling the entire electrode body 20 to have good winding stability, such that the electrode body 20 has a better ability to buffer swelling stress.

In the winding direction of the electrode sheet 300, a distance between the second boundary 3102 and the second edge 3421 is denoted as d', that is, a width of the tail clearance region 332 is denoted as d', where d' satisfies: 30 mm ≤ d' ≤ 1000 mm. For example, d' may be 30 mm, 50 mm, 100 mm, 150 mm, 300 mm, 500 mm, 1000 mm, or any range composed of any two of these values. When the dimension d' of the tail clearance region 332 is in the range of 30 mm to 1000 mm, it allows the tail clearance region 332 to have an appropriate length for termination, improving the connection stability at the tail end of the electrode body 20, thereby enabling good winding stability of the entire electrode assembly, and ensuring an appropriate distribution range for the first protruding portions 311 near the outer turns, thereby providing support for the separator 50 in the outer turns and mitigating squeezing issues in the outer turns of the electrode body 20. Preferably, d' satisfies: 100 mm ≤ d' ≤ 500 mm.

An area of the head clearance region 331 is denoted as A, where A and E satisfy: 0 ≤ A/E ≤ 0.3, for example, A/E may be 0, 0.1, 0.15, 0.20, 0.25, 0.3, or any range composed of any two of these values. Setting A/E in the range of 0 to 0.3 facilitates alignment of the end of the electrode sheet 300 with the separator 50, helping to wind the electrode sheet 300 and the separator 50 from the head clearance region 331, and resulting in a good winding yield for the electrode body 20. Additionally, the first protruding portions 311 can provide support in the inner layers of the electrode body 20, improving the electrolyte wetting effect in the inner turns of the electrode body 20.

In the winding direction of the electrode sheet 300, a distance between the first boundary 3101 and the first edge 3411 is denoted as a', that is, a width of the head clearance region 331 is denoted as a', where a' satisfies: 30 mm ≤ a' ≤ 1000 mm, for example, a' may be 30 mm, 50 mm, 100 mm, 200 mm, 1000 mm, or any range composed of any two of these values. When the dimension a' of the head clearance region 331 is in the range of 30 mm to 1000 mm, it helps to set an appropriate distribution range for the protruding point region 310, allowing the first protruding portions 311 in the inner turns to provide better support, and improving the electrolyte wetting effect in the inner turns of the electrode body 20. Additionally, it facilitates coordination with the tail clearance region 332, ensuring an appropriate spacing between the head clearance region 331 and the tail clearance region 332 for setting the protruding point region 310, so that the distribution range of the protruding point region 310 is suitable, thereby better mitigating squeezing issues. Preferably, a' satisfies: 60 mm ≤ a' ≤ 500 mm.

The first surface of the electrode sheet 300 has an edge clearance region 340, where the edge clearance region 340 includes a first region 341 and a second region 342. In the width direction Y of the electrode sheet 300, the first region 341 is connected to one side of the protruding point region 310, the second region 342 is connected to the other side of the protruding point region 310, the first region 341 extends to an edge of the electrode sheet 300 in a direction away from the second region 342, and the second region 342 extends to an edge of the electrode sheet 300 in a direction away from the first region 341. That is, the two opposite boundaries of the protruding point region 310 in the width direction Y of the electrode sheet 300 are spaced from the corresponding edges of the electrode sheet 300, preventing deformation stress generated from processing the first protruding portions 311 in the protruding point region 310 from causing abnormal deformations such as wavy edges or wrinkles at the edge portions of the electrode sheet 300.

Specifically, the electrode sheet 300 includes a third edge 3431 and a fourth edge 3441 oppositely disposed in the width direction Y of the electrode sheet 300, and the protruding point region 310 includes a third boundary 3103 and a fourth boundary 3104 oppositely disposed in the width direction Y of the electrode sheet 300, where the third boundary 3103 corresponds to the third edge 3431, and the fourth boundary 3104 corresponds to the fourth edge 3441. The first region 341 is formed between the third boundary 3103 and the third edge 3431, the second region 342 is formed between the fourth boundary 3104 and the fourth edge 3441, and the first region 341 and the second region 342 extend in the length direction X of the electrode sheet 300 to connect to the end clearance region 330. That is, an extension line of the first boundary 3101, an extension line of the second boundary 3102, the third boundary 3103, and the third edge 3431 define the first region 341; an extension line of the first boundary 3101, an extension line of the second boundary 3102, the fourth boundary 3104, and the fourth edge 3441 define the second region 342; an extension line of the first boundary 3101, the first edge 3411, the third edge 3431, and the fourth edge 3441 define the head clearance region 331; an extension line of the second boundary 3102, the second edge 3421, the third edge 3431, and the fourth edge 3441 define the tail clearance region 332; the protruding point region 310 is located within a region defined by the first boundary 3101, the second boundary 3102, the third boundary 3103, and the fourth boundary 3104; and the first protruding portion 311 may be inscribed within at least one of the first boundary 3101, the second boundary 3102, the third boundary 3103, and the fourth boundary 3104.

Optionally, the first boundary 3101, the second boundary 3102, the first edge 3411, and the second edge 3421 are parallel to the width direction Y of the electrode sheet 300, and the third boundary 3103, the fourth boundary 3104, the third edge 3431, and the fourth edge 3441 are parallel to the length direction X of the electrode sheet 300. In this case, the head clearance region 331 and the tail clearance region 332 are each independently rectangular or square, and the first region 341 and the second region 342 are rectangular.

An area of the first region 341 is denoted as S1, where S1 and E satisfy: 0.01 ≤ S1/E ≤ 0.4, for example, S1/E may be 0.01, 0.05, 0.1, 0.2, 0.3, 0.4, or any range composed of any two of these values. By setting S1/E in the range of 0.01 to 0.4, the first protruding portions 311 can provide support for the edge region of the separator 50 while ensuring that the distance from the first protruding portions 311 to the edge of the electrode sheet 300 is not too close, preventing abnormal deformations of the edge portion of the electrode sheet 300 such as bending, unevenness, or wavy edges at the edge portion of the electrode sheet 300 due to deformation stress from processing the first protruding portions 311.

An area of the second region 342 is denoted as S2, where S2 and E satisfy: 0.01 ≤ S2/E ≤ 0.4, for example, S2/E may be 0.01, 0.1, 0.2, 0.25, 0.3, 0.4, or any range composed of any two of these values. By setting S1/E in the range of 0.01 to 0.4, similarly, the first protruding portions 311 can provide support for the edge region on the other side of the separator 50 while preventing abnormal deformations such as bending, unevenness, or wavy edges at the edge portion of the electrode sheet 300 due to deformation stress from processing the first protruding portions 311.

In the width direction Y of the electrode sheet 300, a minimum distance between the third edge 3431 and the third boundary 3103 is the width T11 of the first region 341 in the width direction Y of the electrode sheet 300, and a minimum distance between the fourth edge 3441 and the fourth boundary 3104 is the width T12 of the second region 342 in the width direction Y of the electrode sheet 300. T11 satisfies: 0.5 mm ≤ T11 ≤ 30 mm, and T12 satisfies: 0.5 mm ≤ T12 ≤ 30 mm, where a difference between the width T11 of the first region 341 in the width direction Y of the electrode sheet 300 and the width T12 of the second region 342 in the width direction Y of the electrode sheet 300 is denoted as ΔT1, where ΔT1 = |T11-T112|, and ΔT1 satisfies: 0 mm ≤ ΔT1 ≤ 29.5 mm. When this range is satisfied, it allows the lithium-ion migration rate to be within an appropriate range during high-rate charge-discharge testing, improving the high- and low-temperature cycling performance of the battery.

Optionally, one of the first region 341 and the second region 342 is used for mounting a tab assembly 40 of the electrode assembly, as shown in FIG. 1. For example, the first region 341 is used for mounting the tab assembly 40 of the electrode assembly, and the protruding point region 310 is spaced from the tab assembly 40. In this case, the protruding point region 310 is defined by the first boundary 3101, the second boundary 3102, the third boundary 3103, and the fourth boundary 3104.

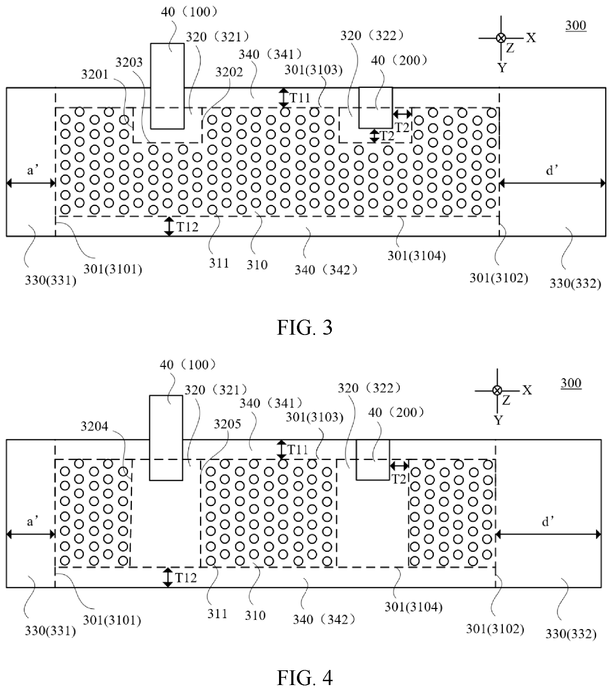

Optionally, as shown in FIG. 3, the first surface further includes a tab region 320, where the tab region 320 extends from the third boundary 3103 toward a side where the fourth boundary 3104 is located, and the tab region 320 is used for mounting a tab assembly 40 of the electrode assembly, with the tab assembly 40 being spaced from the protruding point region 310. When the tab assembly 40 is mounted in the tab region 320, the processing method affects the mounting stability of the tab assembly 40 and the stability of the surrounding structure of the tab assembly 40, thereby affecting the interface stability of the electrode sheet 300. For example, when the tab assembly 40 is pressed onto the electrode sheet 300 by rolling, if the tab assembly 40 is pressed together with the region provided with the first protruding portions 311 or if the tab assembly 40 is too close to the first protruding portions 311, issues such as deformation or indentations of the first protruding portions 311 may occur, leading to interface degradation of the electrode sheet 300 near the tab assembly 40. In embodiments of this application, designating the tab region 320 for mounting the tab assembly 40 facilitates the mounting of the tab assembly 40, reduces process difficulty, improves the mounting stability of the tab assembly 40, enhances the interface stability near the tab assembly 40, and allows the tab assembly 40 to be offset from the first protruding portions 311 in the thickness direction Z of the electrode sheet 300, contributing to increasing the energy density of the battery when the electrode assembly is applied in a battery.

It can be understood that the wider the distribution range of the multiple first protruding portions 311 on the electrode sheet 300, the larger the effective support area of the multiple first protruding portions 311 for the entire electrode body 20, and thus the fewer the issues caused by squeezing. In embodiments of this application, the tab region 320, the end clearance region 330, and the edge clearance region 340 are combined. The end clearance region 330 provides a winding buffer region for the electrode body 20, thereby improving the winding stability of the electrode body 20 and reducing winding instability caused by using a region with first protruding portions 311 as the winding start or end point, protecting the straight segment 21. In this context, combined with the tab region 320 and the edge clearance region 340, it prevents the portion of the electrode body 20 mounted with the tab assembly 40 from swelling, which otherwise in turn causes the tab assembly 40 to squeeze the electrode body 20, reducing mutual damage between the tab assembly 40 and the electrode body 20. The support provided by the first protruding portions 311 extends to the tab region 320, making the tab region 320 of the electrode sheet 300 less prone to squeezing, and reserving a portion of the region to accommodate electrolyte, facilitating electrolyte entry and exit in the electrode body 20 and improving the electrolyte wetting effect. Therefore, the electrode assembly of embodiments of this application not only mitigates interface issues caused by squeezing at the corner segments 22 but also reduces negative issues at the straight segments 21 due to squeezing. When the electrode assembly is applied in a battery, it can improve the performance at the corner positions of the cell, improving the overall cycling performance of the battery.

As shown in FIG. 3, a spacing between the tab assembly 40 and the protruding point region 310 is denoted as T2, where the spacing between the tab assembly 40 and the protruding point region 310 includes a distance in the length direction X of the electrode sheet 300 and a distance in the width direction Y, both distances in the two directions being T2. T2 satisfies: 0.5 mm ≤ T2 ≤ 30 mm, for example, T2 may be 0.5 mm, 1 mm, 2 mm, 8 mm, 10 mm, 15 mm, 20 mm, 30 mm, or any range composed of any two of these values. When T2 is in the range of 0.5 mm to 30 mm, the spacing between the tab assembly 40 and the protruding point region 310 is appropriate, meeting the support requirements of the first protruding portions 311 for the tab assembly 40 while facilitating processing.

The number of tab regions 320 on the same electrode sheet 300 is at least one, and an area of each tab region 320 is denoted as M, M satisfying: 0.01 ≤ M/E ≤ 0.2. Each tab region 320 is used for disposing at least one tab assembly 40. For example, the tab assembly 40 includes a tab 100 and a protective adhesive 200, where the tab 100 and the protective adhesive 200 may be mounted in the same tab region 320; or, the tab 100 is mounted in one tab region 320, and the protective adhesive 200 is mounted in another tab region 320.

The number of tabs 100 is multiple, where a portion of the tabs 100 are mounted on one electrode sheet 300, and another portion of the tabs 100 are mounted on another electrode sheet 300. The tabs 100 mounted on the positive electrode sheet 410 are positive electrode tabs, and the tabs 100 mounted on the negative electrode sheet 420 are negative electrode tabs. The tab region 320 includes a tab mounting region 321, where the tab mounting region 321 is used for accommodating a tab 100 of the electrode assembly. An area of the tab mounting region 321 is denoted as B, where B and E satisfy: 0.01 ≤ B/E ≤ 0.2, for example, B/E may be 0.01, 0.05, 0.08, 0.1, 0.12, 0.15, 0.18, 0.2, or any range composed of any two of these values.

Optionally, when only one electrode sheet 300 of the two electrode sheets 300 of opposite polarities has a protruding point region 310, a tab region 320, and an end clearance region 330, a portion of the tabs 100 are disposed corresponding to the tab mounting region 321 of one electrode sheet 300, while another portion of the tabs 100 are directly mounted in an edge region of the other electrode sheet 300. Optionally, when both electrode sheets 300 of opposite polarities have a protruding point region 310, a tab region 320, and an end clearance region 330, a portion of the tabs 100 are disposed corresponding to the tab mounting region 321 of one electrode sheet 300, and another portion of the tabs 100 are mounted corresponding to the tab mounting region 321 of the other electrode sheet 300.

Since lithium ions migrating to the negative electrode tab may cause lithium precipitation at the negative electrode tab due to the absence of a lithium-intercalation structure such as graphite at the negative electrode tab, optionally, the tab assembly 40 further includes a protective adhesive 200. The number of protective adhesives 200 may be multiple. After the separator 50 and the two electrode sheets 300 are wound to form a flat electrode body 20, each protective adhesive 200 is attached to the surface of the negative electrode tab, separating the positive electrode sheet 410 from the negative electrode tab to prevent lithium precipitation around the negative electrode tab.

The number of tab regions 320 on the same electrode sheet 300 is multiple, and the tab region 320 further includes a protective adhesive mounting region 322, where the protective adhesive mounting region 322 is spaced from the tab mounting region 321, and the protective adhesive mounting region 322 is used for mounting a protective adhesive 200 of the electrode assembly. An area of the protective adhesive mounting region 322 is denoted as C, where C and E satisfy: 0.01 ≤ C/E ≤ 0.2, for example, C/E may be 0.01, 0.05, 0.08, 0.1, 0.12, 0.15, 0.18, 0.2, or any range composed of any two of these values.

Optionally, as shown in FIG. 3, the tab region 320 is spaced from the fourth boundary 3104. Specifically, the tab region 320 includes a first side boundary 3201, a second side boundary 3202, and a bottom boundary 3203. The first side boundary 3201 and the second side boundary 3202 are disposed between the first boundary 3101 and the second boundary 3102 in the length direction X of the electrode sheet 300, the first side boundary 3201 and the second side boundary 3202 are oppositely disposed and both connected to the third boundary 3103, and the bottom boundary 3203 is disposed between the third boundary 3103 and the fourth boundary 3104 in the width direction Y of the electrode sheet 300 and the bottom boundary 3203 is connected between the first side boundary 3201 and the second side boundary 3202. In this case, the tab region 320 is defined by the third boundary 3103, the first side boundary 3201, the second side boundary 3202, and the bottom boundary 3203, and the protruding point region 310 is defined by the first boundary 3101, the second boundary 3102, the third boundary 3103, the fourth boundary 3104, the first side boundary 3201, the second side boundary 3202, and the bottom boundary 3203. The number of tab regions 320 on the first surface of the same electrode sheet 300 may be multiple.

Optionally, as shown in FIG. 4, the tab region 320 extends from the third boundary 3103 through the protruding point region 310 along the width direction Y of the electrode sheet 300. Specifically, the tab region 320 has a third side boundary 3204 and a fourth side boundary 3205, where the third side boundary 3204 and the fourth side boundary 3205 are located between the first boundary 3101 and the second boundary 3102 in the length direction X of the electrode sheet 300, and in the width direction Y of the electrode sheet 300, opposite ends of the third side boundary 3204 are connected to the third boundary 3103 and the fourth boundary 3104, respectively, and opposite ends of the fourth side boundary 3205 are connected to the third boundary 3103 and the fourth boundary 3104, respectively. In this case, the tab region 320 is defined by the third boundary 3103, the fourth boundary 3104, the third side boundary 3204, and the fourth side boundary 3205. When the number of tab regions 320 on the same electrode sheet 300 is one, the number of protruding point regions 310 is two, and the two protruding point regions 310 are disposed on two opposite sides of the tab region 320 in the length direction X of the electrode sheet 300. When the number of tab regions 320 on the same electrode sheet 300 is multiple, the number of protruding point regions 310 is also multiple, and each tab region 320 is located between two adjacent protruding point regions 310 in the length direction X of the electrode sheet 300, with each tab assembly 40 being mounted in one of the tab regions 320.

Optionally, the tab region 320 is disposed at the straight segment 21, and the protruding point region 310 is disposed at the corner segment 22. In the length direction X of the electrode sheet 300, a dimension of the corner segment 22 is denoted as W5, and a dimension of the protruding point region 310 is denoted as W6, where W6 = W5, so that the first protruding portions 311 contact the corresponding electrode sheet 300 only at the corner segment 22 to provide support. In this case, the first protruding portions 311 can provide good support, balancing the wetting effect between the straight segment 21 and the corner segment 22, improving the weak point of the cell, and improving the overall cycling performance of the cell.

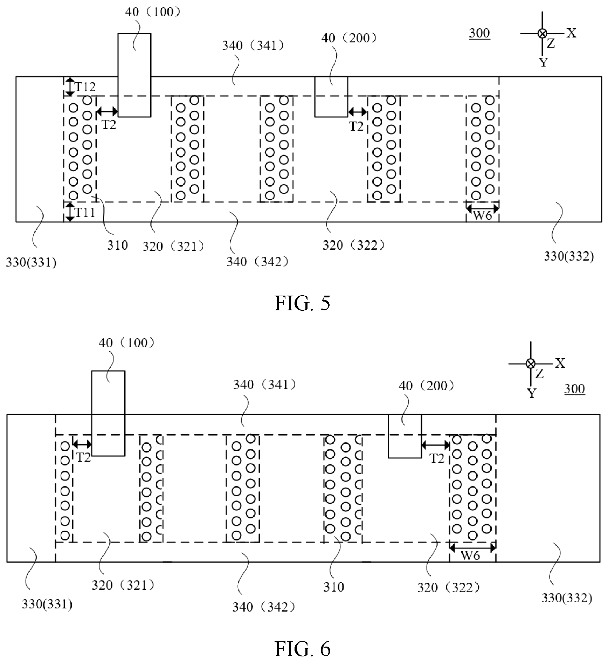

Optionally, the tab region 320 is disposed at the straight segment 21, and the protruding point region 310 is disposed at the corner segment 22 and extends to the straight segment 21, with two protruding point regions 310 of a same turn of the electrode sheet 300 being spaced from each other, as shown in FIG. 6. In the length direction X of the electrode sheet 300, a dimension of the corner segment 22 is denoted as W5, and a dimension of the protruding point region 310 is denoted as W6, where W6 > W5, enabling the first protruding portions 311 of the protruding point region 310 to support a larger area, improving the wetting channel of the electrode sheet 300, addressing issues of insufficient electrolyte and premature failure in some regions due to uneven wetting, and improving cycling performance. Consequently, when the electrode assembly is applied in a battery, it can prolong the charge-discharge cycle life of the battery at 3C/5C, increasing the number of stable cycles of the battery.

Optionally, W5 satisfies: 0.5 mm ≤ W5 ≤ 20 mm, for example, W5 may be 0.5 mm, 2 mm, 5 mm, 8 mm, 10 mm, 12 mm, 15 mm, 20 mm, or any range composed of any two of these values. W6 satisfies: 0.5 mm ≤ W6 ≤ 100 mm, for example, W6 may be 0.5 mm, 2 mm, 8 mm, 15 mm, 30 mm, 50 mm, 100 mm, or any range composed of any two of these values.

As shown in FIG. 5 for the electrode sheet 300, optionally, the dimension W6 of all protruding point regions 310 in the length direction X of the electrode sheet 300 is equal. It can be understood that from the inner turns to the outer turns of the electrode body 20, the circumference of each turn of the electrode sheet 300 gradually increases, where a dimension of the corner segment 22 of the outermost turn of the electrode sheet 300 in the length direction X of the electrode sheet 300 is denoted as Wmax, and W6 ≥ Wmax. Thus, when the dimension W6 of all protruding point regions 310 in the length direction X of the electrode sheet 300 is equal, each protruding point region 310 can cover the corresponding corner segment 22, and some protruding point regions 310, while covering the corner segment 22, can also extend to partially cover the straight segment 21.

As shown in FIG. 6 for the electrode sheet 300, optionally, from the inner turns to the outer turns of the electrode body 20, the dimension W6 of the protruding point region 310 in the length direction X of the electrode sheet 300 gradually increases. In this case, from the inner turns to the outer turns of the electrode body 20, the dimension W6 of the protruding point region 310 in the length direction X of the electrode sheet 300 gradually increases with the increasing dimension of the corner segment 22 in the length direction X of the electrode sheet 300. In this case, the dimension W6 of the protruding point region 310 in the length direction X of the electrode sheet 300 may be equal to the dimension of the corresponding corner segment 22 in the length direction X of the electrode sheet 300, meaning the protruding point region 310 only covers the corresponding corner segment 22; or, the dimension W6 of the protruding point region 310 in the length direction X of the electrode sheet 300 may be greater than the dimension of the corresponding corner segment 22 in the length direction X of the electrode sheet 300, meaning the protruding point region 310 covers the corresponding corner segment 22 and extends to the straight segment 21.

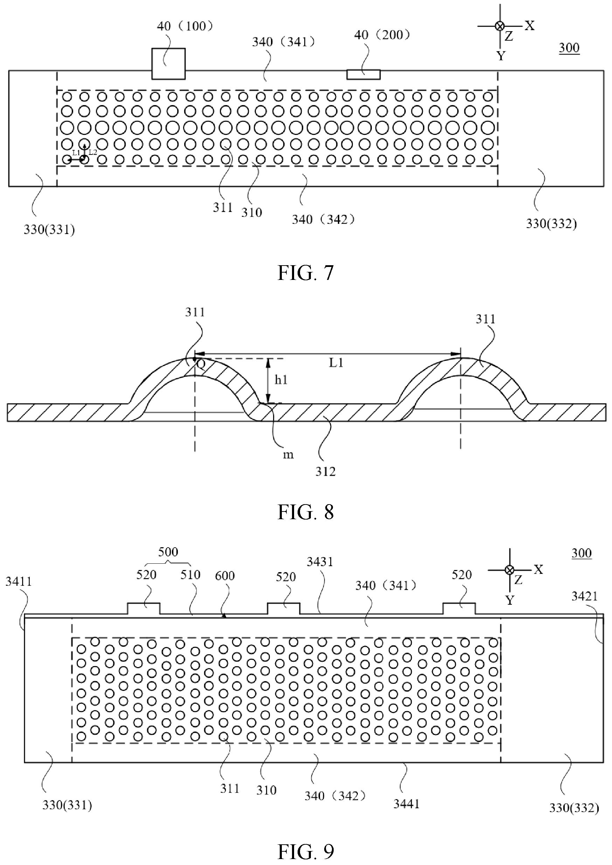

In embodiments of this application, as shown in FIG. 8, the first protruding portion 311 has a vertex Q and a bottom edge m, where the bottom edge m of the first protruding portion 311 is connected to a surface of the main body portion 312 of the electrode sheet 300 (the surface may be a flat surface or a convex arc surface), the first protruding portion 311 protrudes from the main body portion of the electrode sheet 300, and the vertex Q of the first protruding portion 311 is the point farthest from the bottom edge m of the first protruding portion 311 in the thickness direction Z of the electrode sheet 300. A height of the first protruding portion 311 is a dimension in the thickness direction Z of the electrode sheet 300 from the vertex Q of the first protruding portion 311 to the bottom edge m of the first protruding portion 311. When the corner segment 22 has first protruding portions 311, a height of the first protruding portions 311 disposed at the corner segment 22 is denoted as h1. When the straight segment 21 has first protruding portions 311, a height of the first protruding portions 311 disposed at the straight segment 21 is denoted as h2, where h2 ≤ h1, to improve the electrolyte wetting effect. Further, h1 satisfies: 55 µm ≤ h1 ≤ 70 µm; and a height h2 of the first protruding portions 311 disposed at the straight segment 21 satisfies: 10 µm ≤ h2 ≤ 18 µm.

Optionally, an outer contour of the first protruding portion 311 is circular, elliptical, or a regular polygon. A top surface of the first protruding portion 311 that contacts the separator 50 is a circular arc surface to prevent the top end of the first protruding portion 311 from being too sharp and piercing the separator 50.

Optionally, an outer contour dimension of a cross-section of the first protruding portion 311 perpendicular to the thickness direction Z of the electrode sheet 300 is equal. For example, when the outer contour of the first protruding portion 311 is circular, the radii of the outer contours of the circular first protruding portions 311 are equal; when the outer contour of the first protruding portion 311 is a regular polygon, the radii of the circumscribed circles of the regular polygons are equal.

When two electrode sheets 300 of opposite polarities and the separator 50 are wound to form a flat electrode body 20, the central region of the protruding point region 310 is more likely to experience insufficient electrolyte due to squeezing. In embodiments of this application, the outer contour dimension of the first protruding portions 311 located in the central region of the protruding point region 310 is set to be larger, increasing the spacing between the electrode sheet 300 and the separator 50 in the central region of the protruding point region 310, thereby mitigating insufficient electrolyte in the central region of the protruding point region 310 and improving the electrolyte wetting effect. For the electrode sheet 300 shown in FIGs. 2 to 6, a design may be adopted where the outer contour dimension of the first protruding portions 311 in the central region of the protruding point region 310 is larger, and the outer contour dimension of the first protruding portions 311 in the edge region of the protruding point region 310 is smaller, to mitigate insufficient electrolyte issues. Optionally, as shown in FIG. 7, in the width direction Y of the electrode sheet 300, the outer contour dimension of the first protruding portion 311 gradually decreases from the central region to the edge region of the protruding point region 310; and/or, in the length direction X of the electrode sheet 300, the outer contour dimension of the first protruding portion 311 gradually decreases from the central region to the edge region of the protruding point region 310.

The electrode sheet 300 in embodiments of this application includes a current collector and an active material layer disposed on a surface of the current collector, where a surface of the active material layer facing away from the current collector forms the first surface. The first protruding portion 311 may be formed by a portion of the current collector and a portion of the active material layer together. For example, the first protruding portion 311 in embodiments of this application may be processed by rolling, specifically, by applying force to a partial region of the electrode sheet 300 on one side of the electrode sheet 300, causing the current collector and the active material layer in that region to deform and bend together, thereby forming the first protruding portion 311.

The portion of the current collector used to form the first protruding portion 311 is a protruding portion base, where the protruding portion base has a first outer peripheral edge line, and the first outer peripheral edge line has a first circumscribed circle. Two adjacent protruding portion bases have a first spacing L1 and a second spacing L2, where the first spacing L1 is a distance in the length direction of the electrode sheet between centers of the first circumscribed circles of the first outer peripheral edge lines of the two adjacent protruding portion bases, and L1 satisfies: 0.5 mm ≤ L1 ≤ 40 mm. Two adjacent protruding portion bases have a second spacing L2, the second spacing L2 being a distance in the width direction of the electrode sheet between centers of the first circumscribed circles of the first outer peripheral edge lines of the two adjacent protruding portion bases, and L2 satisfies: 0.5 mm ≤ L2 ≤ 40 mm.

Optionally, a surface of the current collector includes two coating surfaces oppositely disposed in the thickness direction of the electrode sheet, the active material layer is disposed on at least one of the coating surfaces, and the active material layer covers the entire coating surface. Alternatively, as shown in FIG. 9, the current collector 500 includes a coating portion 510 and a blank foil portion 520, where the blank foil portion 520 is disposed on one side of the coating portion 510 in the width direction Y of the electrode sheet 300, the blank foil portion 520 is integrally formed with the coating portion 510, and the blank foil portion 520 forms multiple tabs 100. The active material layer 600 is disposed on a surface of the coating portion 510, and a surface of the active material layer facing away from the coating portion 510 forms the first surface. Specifically, the coating portion 510 includes two main body surfaces oppositely disposed in the thickness direction Z of the electrode sheet 300, the active material layer 600 is disposed on at least one of the main body surfaces, and a surface of the active material layer 600 facing away from the main body surface forms the first surface.

The electrode sheet 300 includes a positive electrode sheet 410 and a negative electrode sheet 420. Embodiments of this application do not impose specific limitations on the positive electrode sheet 410 and the negative electrode sheet 420, and any components known in the art that can be used in an electrode assembly are applicable to this application.

In some exemplary embodiments, the negative electrode sheet 420 may include a negative electrode current collector and a negative electrode active material layer disposed on a surface of the negative electrode current collector. For example, the negative electrode current collector may include at least one of copper foil, aluminum foil, nickel foil, or a carbon-based current collector; a thickness of the negative electrode current collector may be 1 µm to 200 µm. The negative electrode active material layer may be disposed on one surface or both opposite surfaces of the negative electrode current collector. Further, in the thickness direction of the negative electrode sheet 420, the negative electrode active material layer may be applied only to a portion of the negative electrode current collector. For example, a thickness of the negative electrode active material layer may be 10 µm to 500 µm.

The negative electrode active material layer includes a negative electrode active material, for example, the negative electrode active material includes at least one of lithium metal, natural graphite, artificial graphite, or a silicon-based material, where the silicon-based material includes at least one of silicon, a silicon-oxygen compound, a silicon-carbon compound, or a silicon alloy. The negative electrode active material layer may further include a conductive agent and/or a binder. For example, the conductive agent in the negative electrode active material layer may include at least one of carbon black, acetylene black, Ketjen black, flake graphite, graphene, carbon nanotubes, carbon fibers, or carbon nanowires; the binder in the negative electrode active material layer may include at least one of carboxymethyl cellulose (CMC), polyacrylic acid, polyacrylate, polyacrylate ester, polyvinylpyrrolidone, polyaniline, polyimide, polyamide-imide, polysiloxane, styrene-butadiene rubber, epoxy resin, polyester resin, polyurethane resin, or polyfluorene.

In some exemplary embodiments, the positive electrode sheet 410 includes a positive electrode current collector and a positive electrode active material layer disposed on a surface of the positive electrode current collector. For example, the positive electrode current collector may include aluminum foil, or other positive electrode current collectors commonly used in the art, and a thickness of the positive electrode current collector may be 1 µm to 200 µm. The positive electrode active material layer may be disposed on one surface or both opposite surfaces of the positive electrode current collector. Further, in the thickness direction of the positive electrode sheet 410, the positive electrode active material layer may be applied only to a partial region of the positive electrode current collector, and a thickness of the positive electrode active material layer may be 10 µm to 500 µm.

The positive electrode active material layer includes a positive electrode active material, where the positive electrode active material includes LiCoO₂, LiNiO₂, LiMn₂O₄, LiCo_{1-y}MyO₂, LiNi_{1-y}MyO₂, LiMn_{2-y}MyO₄, LiNiₓCo_{y}Mn_{z}M_{1-x-y-z}O₂, where M is selected from at least one of Fe, Co, Ni, Mn, Mg, Cu, Zn, Al, Sn, B, Ga, Cr, Sr, V, or Ti, and 0 ≤ y ≤ 1, 0 ≤ x ≤ 1, 0 ≤ z ≤ 1, x + y + z ≤ 1. For example, the positive electrode active material may include at least one of lithium cobalt oxide, lithium manganate, lithium iron phosphate, lithium iron manganese phosphate, lithium nickel cobalt manganate, lithium nickel cobalt aluminate, or lithium nickel manganate, and the above positive electrode active materials may be doped and/or coated. The positive electrode active material layer further includes a binder and a conductive agent. For example, the binder in the positive electrode active material layer may include at least one of polyvinylidene fluoride, a copolymer of vinylidene fluoride-hexafluoropropylene, styrene-acrylate copolymer, styrene-butadiene copolymer, polyamide, polyacrylonitrile, polyacrylate, polyacrylic acid, polyacrylate salt, sodium carboxymethyl cellulose, polyvinyl acetate, polyvinylpyrrolidone, polyvinyl ether, polymethyl methacrylate, polytetrafluoroethylene, or polyhexafluoropropylene; the conductive agent in the positive electrode active material layer may include at least one of conductive carbon black, acetylene black, Ketjen black, flake graphite, graphene, carbon nanotubes, or carbon fibers.

Embodiments of this application further provide an electrode assembly, where the electrode assembly includes multiple tab assemblies 40, the electrode sheet 300 as described above, and a separator 50 disposed between two electrode sheets 300, where the separator 50 and the two electrode sheets 300 are wound along the length direction X of the electrode sheet 300 to form a flat electrode body 20.

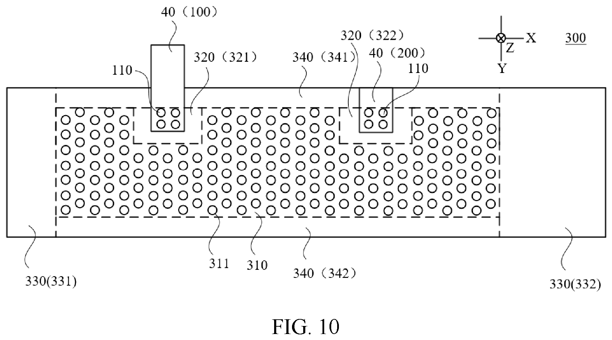

Optionally, as shown in FIG. 10, the tab assembly 40 includes a connecting segment connected to the electrode sheet 300 and a mating segment extending beyond an edge of the electrode sheet 300, where a surface of the connecting segment facing away from the electrode sheet is provided with multiple second protruding portions 110. The second protruding portions 110 provide support for the structure at the tab assembly 40, for example, the second protruding portions 110 contact the separator 50, providing support for the separator 50 and improving the electrolyte wetting effect at the tab assembly 40. Further, a boundary of the region of the tab assembly 40 provided with the multiple second protruding portions 110 is aligned with the second boundary 3102 of the protruding point region 310. The shape, size, and arrangement of the second protruding portions 110 and the first protruding portions 311 may be set to be the same. The second protruding portions 110 may be processed by rolling, where the second protruding portions 110 are formed by bending a portion of the tab assembly 40 and a portion of the electrode sheet 300 toward a same side.

Embodiments of this application do not impose specific limitations on the separator 50, tabs, and protective adhesive, and any components known in the art that can be used in an electrode assembly are applicable to this application.

In some exemplary embodiments, the separator 50 includes at least one of polyethylene, polypropylene, polyvinylidene fluoride, polyethylene terephthalate, polyimide, or aramid. For example, polyethylene includes at least one of high-density polyethylene, low-density polyethylene, or ultra-high molecular weight polyethylene. In particular, polyethylene and polypropylene provide good short-circuit prevention and can improve the stability of the electrode assembly through a shutdown effect. A thickness of the separator 50 is in a range of approximately 3 µm to 500 µm. The positive electrode tab and negative electrode tab are made of a metal conductive material.

Embodiments of this application further provide a battery, where the battery includes a housing and the electrode assembly as described above, and the electrode assembly is disposed in an internal space of the housing. The battery further includes an electrolyte, where the electrolyte fills the internal space of the housing and wets the electrode assembly. Embodiments of this application do not impose specific limitations on the electrolyte, and any materials known in the art that can be used as an electrolyte are applicable to this application.

The following takes the electrode assembly of a lithium-ion battery as an example, combined with specific examples, to further illustrate this application. It should be understood that these examples are only used to illustrate this application and are not intended to limit its scope.

In examples and comparative examples of this application, the following methods are used to prepare lithium-ion batteries and test performance of the lithium-ion batteries:

### I. Preparation method of lithium-ion battery

### (1) Preparation of positive electrode sheet 410

Positive electrode active material lithium cobalt oxide LiCoO₂, conductive agent conductive carbon black, and binder polyvinylidene fluoride PVDF were dissolved in N-methylpyrrolidone (NMP) solution at a weight ratio of 97.9:0.9:1.2 to form a positive electrode slurry. A 9 µm aluminum foil was used as a positive electrode current collector, and the positive electrode slurry was applied to the positive electrode current collector, followed by drying, cold pressing, and cutting to obtain the positive electrode sheet 410. A compacted density of the positive electrode active material layer of the positive electrode sheet 410 was 4.2 g/cm³.

In the following examples and comparative examples, the positive electrode sheet 410 had a protruding point region 310, a tab region 320, a head clearance region 331, a tail clearance region 332, a first region 341, and a second region 342.

### (2) Preparation of negative electrode sheet 420

Negative electrode active material artificial graphite, binder styrene-butadiene rubber SBR, and thickener sodium carboxymethyl cellulose CMC were dissolved in deionized water at a weight ratio of 97.4:1.4:1.2 to form a negative electrode slurry. A 10 µm copper foil was used as a negative electrode current collector, and the negative electrode slurry was applied to the negative electrode current collector, followed by drying, cold pressing, and cutting to obtain the negative electrode sheet 420. A compacted density of the negative electrode active material layer of the negative electrode sheet 420 was 1.8 g/cm³.

### (3) Preparation of separator 50

Separator substrate was 5 µm thick polyethylene PE, with a 2 µm thick aluminum oxide ceramic layer applied to one surface of the separator substrate. Finally, binder polyvinylidene fluoride PVDF was applied to two surfaces of the separator substrate with the single ceramic layer at 2.5 mg/1540.25 mm², followed by drying to form a porous layer. A porosity of the porous layer of the separator 50 was 39%.

### (4) Preparation of electrolyte

In an environment with a water content of less than 10 ppm, ethylene carbonate shorted for EC, propylene carbonate shorted for PC, diethyl carbonate shorted for DEC, ethyl propionate shorted for EP, and propyl propionate shorted for PP were mixed well at a mass ratio of 1:1:1:1:1. Electrolyte salt LiPF₆ was dissolved in the above non-aqueous solvent and mixed well to form an electrolyte, where, based on the mass of the electrolyte, a mass percentage of LiPF₆ is 12.5%.

### (5) Assembly of lithium-ion battery

A positive electrode tab 100 was mounted in a tab mounting region of a positive electrode sheet 410 by rolling, a protective adhesive 200 was attached in a protective adhesive mounting region of the positive electrode sheet 410, and a negative electrode tab 100 was mounted in an edge region of the negative electrode sheet 420 by rolling.

The positive electrode sheet 410 mounted with the positive electrode tab 100, the separator 50, and the negative electrode sheet 420 mounted with the negative electrode tab 100 were sequentially stacked, with the separator 50 positioned between the positive electrode sheet 410 and the negative electrode sheet 420 for isolation, and wound to obtain an electrode body 20. The electrode assembly was placed in an outer packaging aluminum-plastic film, moisture was removed at 80°C, the above electrolyte was injected and encapsulated, and processes such as formation, degassing, and edge trimming were performed to obtain a lithium-ion battery. The test methods for various parameters of the examples of this application are described below.

### II. Performance testing of lithium-ion battery

### (1) 25°C/45°C cycle test

In an environment of 25°C/45°C, the electrode assembly was charged at a constant current of 1C to a full charge voltage (a designed maximum battery voltage of 4.5 V), then charged at a constant voltage until the current reached 0.02C, and then discharged at a constant current of 0.7C to a final voltage of 3.0 V, with a discharge capacity of a first cycle recorded. The above steps were repeated for 1000 charge-discharge cycles, and the discharge capacity of the lithium-ion battery after 1000 cycles was recorded. 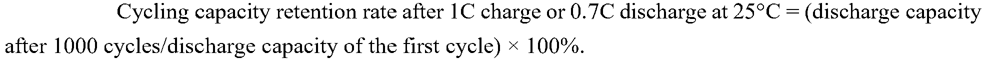 Cycling capacity retention rate after 1C charge or 0.7C discharge at 25°C = (discharge capacity after 1000 cycles/discharge capacity of the first cycle) × 100%. 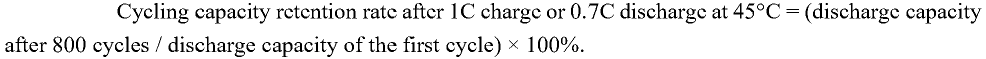 Cycling capacity retention rate after 1C charge or 0.7C discharge at 45°C = (discharge capacity after 800 cycles / discharge capacity of the first cycle) × 100%.

### (2) Battery cycling and lithium precipitation test

Room-temperature cycle test: In an environment of 25°C, the electrode assembly was charged at a constant current of 1C to the full charge voltage (a designed maximum battery voltage of 4.5 V), then charged at a constant voltage, that is, the maximum voltage, until the current reached 0.02C, and then discharged at a constant current of 0.7C to the final voltage of 3.0 V, with the discharge capacity of the first cycle recorded. The above steps were repeated for 1000 charge-discharge cycles, and the discharge capacity of the lithium-ion battery after 1000 cycles was recorded.

High-temperature cycle test: In an environment of 45°C, the electrode assembly was charged at a constant current of 1C to the full charge voltage (a designed maximum battery voltage of 4.5 V), then charged at a constant voltage, that is, the maximum voltage, until the current reached 0.02C, and then discharged at a constant current of 0.7C to the final voltage of 3.0 V, with the discharge capacity of the first cycle recorded. The above steps were repeated for 1000 charge-discharge cycles, and the discharge capacity of the lithium-ion battery after 1000 cycles was recorded.

After the 25°C test, after 1000 charge-discharge cycles, when the battery was in a fully charged state (at a designed maximum battery voltage of 4.5 V), it was disassembled to observe whether lithium precipitation occurs at the negative electrode interface/tab/protective adhesive.

### (3) Winding yield

After jelly-roll structure winding was produced, an X-ray detector was used to measure the overhang (in the width direction of the positive electrode sheet 410, the width by which the edge of the negative electrode sheet 420 exceeded the edge of the positive electrode sheet 410) of the jelly-roll structure. The jelly-roll structure with a width exceeding 0.2 mm was considered a good product. There were 100 test samples in total, and the winding yield = number of good products/total sample size.

In Example 1-1 to Example 1-8 and Comparative Example 1-1 and Comparative Example 1-2, the electrode sheet 300 shown in FIG. 3 was used as the positive electrode sheet 410, with the parameters of the electrode sheet 300 as shown in Table I.

**Table I**

| Item | Numerical values | Item | Numerical values |
|---|---|---|---|
| A/E | 0 | D/E | 0.06 |
| S1/E | 0.01 | S2/E | 0.04 |
| T11 | 1 mm | T12 | 3 mm |
| B/E | 0.01 | C/E | 0.05 |
| L1 | 0.5 mm | L2 | 5 mm |

The parameters and test results of lithium-ion batteries in Example 1-1 to Example 1-9 and Comparative Example 1-1 and Comparative Example 1-2 are shown in Table 1.

**Table 1**

| Item | Y (mm²) | E (mm²) | Y/E | Cycling retention rate after 1C charge or 0.7C discharge at 25°C | Lithium precipitation at negative electrode interface during cycling |
|---|---|---|---|---|---|
| Example 1-1 | 10500 | 105000 | 0.1 | 80% | No |
| Example 1-2 | 21000 | 105000 | 0.25 | 82% | No |
| Example 1-3 | 31500 | 105000 | 0.3 | 87% | No |
| Example 1-4 | 42000 | 105000 | 0.4 | 88% | No |
| Example 1-5 | 52500 | 105000 | 0.5 | 91% | No |
| Example 1-6 | 63000 | 105000 | 0.6 | 90% | No |
| Example 1-7 | 94500 | 105000 | 0.9 | 92% | No |
| Example 1-8 | 99750 | 105000 | 0.95 | 87% | No |
| Example 1-9 | 102900 | 105000 | 0.98 | 86% | No |
| Comparative Example 1-1 | 6300 | 105000 | 0.06 | 53% | Yes |
| Comparative Example 1-2 | 105000 | 105000 | 1 | 51% | Yes |

Based on the results in Table 1, it can be seen that when the ratio of the area Y of the protruding point region 310 to the area of the first surface E of the electrode sheet satisfies 0.1 ≤ Y/E ≤ 0.98, the charge-discharge cycling performance of the lithium-ion battery is good, and no lithium precipitation occurs at the interface. When Y/E is below the lower limit of 0.1 or above the upper limit of 0.98, the charge-discharge cycling performance of the lithium-ion battery deteriorates, and lithium precipitation occurs. Specifically, when Y/E is greater than 0.9, there is no significant change in the charge-discharge cycling performance of the lithium-ion battery. Preferably, 0.3 ≤ Y/E ≤ 0.9, the charge-discharge cycling performance of the lithium-ion battery is better. More preferably, 0.5 ≤ Y/E ≤ 0.9.

Example 2-1 to Example 2-11 differed from Example 1-1 in that the area A of the head clearance region 331 and the area D of the tail clearance region 332 were different.

The parameters and test results of lithium-ion batteries in Example 2-1 to Example 2-11 are shown in Table 2.

**Table 2**

| Item | A/E | D/E | Cycling retention rate after 1C charge or 0.7C discharge at 25°C | Lithium precipitation at negative electrode interface during cycling |
|---|---|---|---|---|
| Example 1-1 | 0 | 0.06 | 80% | No |
| Example 2-1 | 0.05 | 0.06 | 90% | No |
| Example 2-2 | 0.1 | 0.06 | 88% | No |
| Example 2-3 | 0.2 | 0.06 | 87% | No |
| Example 2-4 | 0.3 | 0.06 | 85% | No |
| Example 2-5 | 0.1 | 0.1 | 87% | No |
| Example 2-6 | 0.1 | 0.15 | 88% | No |
| Example 2-7 | 0.1 | 0.5 | 87% | No |
| Example 2-8 | 0.1 | 0.6 | 86% | No |
| Example 2-9 | 0.4 | 0.06 | 81% | No |
| Example 2-10 | 0.1 | 0.7 | 82% | Yes |
| Example 2-11 | 0.1 | 0.05 | 82% | Yes |

Based on the results in Table 2 for Example 1-6 and Example 2-1 to Example 2-4 and Example 2-9, it can be seen that when the ratio of the area A of the head clearance region 331 to the area of the first surface E of the electrode sheet satisfies 0 ≤ A/E ≤ 0.3, the charge-discharge cycling performance of the lithium-ion battery is good, and no lithium precipitation occurs at the interface. Specifically, the smaller the area A of the head clearance region 331, the better the charge-discharge cycling performance of the lithium-ion battery. This is because as the area of the head clearance region 331 decreases, the area Y of the protruding point region 310 increases, resulting in better improvement in the wetting effect and thus better cycling performance. When A/E exceeds the upper limit of 0.3, the charge-discharge cycling performance of the lithium-ion battery deteriorates.

Based on the results in Table 2 for Example 2-2 and Example 2-5 to Example 2-11, it can be seen that when the ratio of the area D of the tail clearance region 332 to the area of the first surface E of the electrode sheet satisfies 0.06 ≤ D/E ≤ 0.6, the charge-discharge cycling performance of the lithium-ion battery is good, and no lithium precipitation occurs at the interface. When D/E is below the lower limit of 0.06 or above the upper limit of 0.6, the charge-discharge cycling performance of the lithium-ion battery is inferior to that within the range, and lithium precipitation occurs.

Example 3-1 to Example 3-11 differed from Example 1-1 in that the area S1 of the first region 341 and the area S2 of the second region 342 were different.

The parameters and test results of lithium-ion batteries in Example 3-1 to Example 3-11 are shown in Table 3.

**Table 3**

| Item | S1/E | S2/E | Cycling retention rate after 1C charge or 0.7C discharge at 25°C | Winding yield |
|---|---|---|---|---|
| Example 1-1 | 0.01 | 0.04 | 80% | 84.0% |
| Example 3-1 | 0.1 | 0.04 | 89% | 92.7% |
| Example 3-2 | 0.25 | 0.04 | 90% | 90.0% |
| Example 3-3 | 0.4 | 0.04 | 86% | 88.0% |
| Example 3-4 | 0.5 | 0.04 | 82% | 85.0% |
| Example 3-5 | 0.04 | 0.01 | 89% | 87.0% |
| Example 3-6 | 0.04 | 0.12 | 86% | 81.2% |
| Example 3-7 | 0.04 | 0.3 | 84% | 79.0% |
| Example 3-8 | 0.04 | 0.4 | 83% | 78.9% |
| Example 3-9 | 0.04 | 0.5 | 83.4% | 79.0% |
| Example 3-10 | 0.005 | 0.04 | 82% | 79.5% |
| Example 3-11 | 0.04 | 0.005 | 81.8% | 79.3% |

Based on the results in Table 3, it can be seen that when the ratio of the area S1 of the first region 341 to the area E of the first surface of the electrode sheet satisfies 0.01 ≤ S 1/E ≤ 0.4, and the ratio of the area S2 of the second region 342 to the area E of the first surface of the electrode sheet satisfies 0.01 ≤ S2/E ≤ 0.4, the charge-discharge cycling performance of the lithium-ion battery is good, and the winding yield is high.

Example 4-1 to Example 4-12 differed from Example 1-1 in that the width T11 of the first region 341 and the width T12 of the second region 342 were different.

The parameters and test results of lithium-ion batteries in Example 4-1 to Example 4-12 are shown in Table 4.

**Table 4**

| Item | T11 (mm) | T12 (mm) | Cycling retention rate after 1C charge or 0.7C discharge at 25°C | Winding yield |
|---|---|---|---|---|
| Example 1-1 | 1 | 3 | 80% | 84.0% |
| Example 4-1 | 3 | 3 | 92% | 99.5% |
| Example 4-2 | 5 | 3 | 88% | 90.0% |
| Example 4-3 | 10 | 3 | 83% | 85.4% |
| Example 4-4 | 30 | 3 | 82% | 81.4% |
| Example 4-5 | 35 | 3 | 81% | 83.2% |
| Example 4-6 | 0.5 | 3 | 80.5% | 81.6% |
| Example 4-7 | 3 | 1 | 86% | 81.2% |
| Example 4-8 | 3 | 2.8 | 90% | 98.8% |
| Example 4-9 | 3 | 5 | 88% | 90.0% |
| Example 4-10 | 3 | 10 | 83% | 85.4% |
| Example 4-11 | 3 | 30 | 81% | 82.4% |
| Example 4-12 | 3 | 35 | 82% | 83.2% |

Based on the results in Table 4, it can be seen that when the width T11 of the first region 341 satisfies 1 mm ≤ T11 ≤ 30 mm, and the width T12 of the second region 342 satisfies 1 mm ≤ T12 ≤ 30 mm, the charge-discharge cycling performance of the lithium-ion battery is good, and the winding yield is high.

When T11 is below the lower limit of 1 mm or above the upper limit of 30 mm, and T12 is below the lower limit of 1 mm or above the upper limit of 30 mm, both the charge-discharge cycling performance and the winding yield of the lithium-ion battery decrease. Preferably, T11 satisfies 1 mm ≤ T11 ≤ 10 mm, and T12 satisfies 1 mm ≤ T12 ≤ 10 mm.

Example 5-1 to Example 5-10 differed from Example 1-1 in that the area B of the tab mounting region 321 and the area C of the protective adhesive mounting region 322 were different.

The parameters and test results of lithium-ion batteries in Example 5-1 to Example 5-10 are shown in Table 5.

**Table 5**

| Item | B/E | C/E | Cycling retention rate after 1C charge or 0.7C discharge at 45°C | Lithium precipitation at tab during cycling | Lithium precipitation at protective adhesive during cycling |
|---|---|---|---|---|---|
| Example 1-1 | 0.01 | 0.05 | 80% | No | No |
| Example 5-1 | 0.1 | 0.05 | 87% | No | No |
| Example 5-2 | 0.2 | 0.05 | 86% | No | No |
| Example 5-3 | 0.05 | 0.01 | 89% | No | No |
| Example 5-4 | 0.05 | 0.15 | 89% | No | No |
| Example 5-5 | 0.05 | 0.2 | 86% | No | No |
| Example 5-6 | 0.05 | 0.05 | 91% | No | No |
| Example 5-7 | 0.25 | 0.05 | 82% | No | No |
| Example 5-8 | 0.05 | 0.23 | 81% | No | No |
| Example 5-9 | 0.005 | 0.05 | 84% | Yes | No |
| Example 5-10 | 0.005 | 0.005 | 82% | Yes | Yes |

Based on the results in Table 5, it can be seen that when the ratio of the area B of the tab mounting region 321 to the area of the first surface E of the electrode sheet satisfies 0.01 ≤ B/E ≤ 0.2, and the ratio of the area C of the protective adhesive mounting region 322 to the area of the first surface E of the electrode sheet satisfies 0.01 ≤ C/E ≤ 0.2, the charge-discharge cycling performance of the lithium-ion battery is good, and no lithium precipitation occurs at the negative electrode interface, the tab 100, or the protective adhesive 200.

When B/E is below the lower limit of 0.01 or above the upper limit of 0.2, or C/E is below the lower limit of 0.01 or above the upper limit of 0.2, the charge-discharge cycling performance of the lithium-ion battery deteriorates. Specifically, when B/E is below the lower limit of 0.01, lithium precipitation occurs at the tab 100; when C/E is below the lower limit of 0.01, lithium precipitation occurs at the protective adhesive 200. This is because when B/E and C/E are below the lower limit, the first protruding portions 311 in the corresponding regions directly press against the tab 100 and the protective adhesive 200, causing damage to them and puncturing the protective adhesive 200, leading to lithium precipitation.

Example 6-1 to Example 6-12 differed from Example 1-4 in that the first spacing L1 of the first protruding portions 311 in the length direction X of the electrode sheet 300 and the second spacing L2 of the first protruding portions 311 in the width direction Y of the electrode sheet 300 were different.

The parameters and test results of lithium-ion batteries in Example 6-1 to Example 6-12 are shown in Table 6.

**Table 6**

| Item | L1 (mm) | L2 (mm) | Cycling retention rate after 1C charge or 0.7C discharge at 25°C | Cycling retention rate after 1C charge or 0.7C discharge at 45°C |
|---|---|---|---|---|
| Example 1-1 | 0.5 | 5 | 80% | 79% |
| Example 6-1 | 5 | 5 | 83% | 85% |
| Example 6-2 | 15 | 5 | 84% | 82% |
| Example 6-3 | 35 | 5 | 83% | 82% |
| Example 6-4 | 40 | 5 | 81% | 80% |
| Example 6-5 | 5 | 0.5 | 85% | 83% |
| Example 6-6 | 5 | 10 | 84% | 82.5% |
| Example 6-7 | 5 | 30 | 83% | 82% |
| Example 6-8 | 5 | 40 | 82% | 81% |
| Example 6-9 | 5 | 42 | 80% | 80% |
| Example 6-10 | 41 | 5 | 81% | 79% |
| Example 6-11 | 0.2 | 5 | 81% | 80.8% |
| Example 6-12 | 5 | 0.2 | 81% | 80.5% |

Based on the results in Table 6, it can be seen that when the first spacing L1 of the first protruding portions 311 in the length direction X of the electrode sheet 300 satisfies 0.5 mm ≤ L1 ≤ 40 mm, and the second spacing L2 of the first protruding portions 311 in the width direction Y of the electrode sheet 300 satisfies 0.5 mm ≤ L2 ≤ 40 mm, both the room-temperature (25°C) charge-discharge cycling performance and the high-temperature (45°C) charge-discharge cycling performance of the lithium-ion battery are improved.

In the drawings of this embodiment, the same or similar reference signs correspond to the same or similar components. In the description of this application, it should be understood that terms such as "upper," "lower," "left," and "right" indicating orientation or positional relationships are based on the orientation or positional relationships shown in the drawings, merely for convenience in describing this application and simplifying the description, and do not indicate or imply that the referred means or element must have a specific orientation, be constructed, or operate in a specific orientation. Therefore, terms describing positional relationships in the drawings are used for exemplary purposes only and should not be construed as limiting this patent. For those skilled in the art, the specific meanings of the above terms can be understood based on specific circumstances.

The above descriptions are merely preferred embodiments of this application and are not intended to limit this application. Any modifications, equivalent substitutions, improvements, and the like made within the spirit and principles of this application shall be included within the protection scope of this application.

## Claims

1. An electrode sheet, the electrode sheet comprising a first surface perpendicular to a thickness direction of the electrode sheet, and the first surface comprising a protruding point region, an end clearance region, an edge clearance region, and a tab region, wherein the end clearance region is connected to an end of the protruding point region in a length direction of the electrode sheet and extends to an edge of the electrode sheet, and the edge clearance region is disposed on one side of the protruding point region in a width direction of the electrode sheet and extends to an edge of the electrode sheet; the protruding point region comprises a third boundary and a fourth boundary oppositely disposed in the width direction of the electrode sheet; and the first surface further comprises a tab region, the tab region extending from the third boundary toward a side where the fourth boundary is located; and the protruding point region comprises multiple first protruding portions, wherein an area of the protruding point region is denoted as Y, a projected area of the first surface in a direction perpendicular to the thickness direction of the electrode sheet is denoted as E, and E and Y satisfy: 0.1 ≤ Y/E ≤ 0.98.

2. The electrode sheet according to claim 1, wherein the electrode sheet satisfies: 0.3 ≤ Y/E ≤ 0.9.

3. The electrode sheet according to claim 1 or 2, wherein the electrode sheet satisfies: 0.5 ≤ Y/E ≤ 0.9.

4. The electrode sheet according to any one of claims 1 to 3, wherein the electrode sheet comprises a first edge and a second edge oppositely disposed in the length direction of the electrode sheet, and the protruding point region comprises a first boundary and a second boundary oppositely disposed in the length direction of the electrode sheet, wherein the first boundary corresponds to the first edge, and the second boundary corresponds to the second edge; and the end clearance region comprises a head clearance region and a tail clearance region, the head clearance region being formed between the first edge and the first boundary, and the tail clearance region being formed between the second edge and the second boundary, and the electrode sheet is configured to be wound with a separator along the length direction of the electrode sheet from the head clearance region to form a flat electrode body.

5. The electrode sheet according to claim 4, wherein an area of the head clearance region is denoted as A, an area of the tail clearance region is denoted as D, and the electrode sheet satisfies at least one of the following conditions: $\left(1\right) 0 \leq A / E \leq 0.3 ; or \left(2\right) 0.06 \leq D / E \leq 0.6 .$ (1)

6. The electrode sheet according to claim 5, wherein 0 ≤ A ≤ 0.1E.

7. The electrode sheet according to any one of claims 1 to 6, wherein the electrode sheet comprises a third edge and a fourth edge oppositely disposed in the width direction of the electrode sheet, and the protruding point region comprises a third boundary and a fourth boundary oppositely disposed in the width direction of the electrode sheet, wherein the third boundary corresponds to the third edge, and the fourth boundary corresponds to the fourth edge; and the edge clearance region comprises a first region and a second region, the first region being formed between the third boundary and the third edge, and the second region being formed between the fourth boundary and the fourth edge, and the first region and the second region extend in the length direction of the electrode sheet to connect to the end clearance region.

8. The electrode sheet according to claim 7, wherein an area of the first region is denoted as S1, and a dimension of the first region in the width direction of the electrode sheet is denoted as T11; an area of the first region is denoted as S2, and a dimension of the first region in the width direction of the electrode sheet is denoted as T12; and the electrode sheet satisfies at least one of the following conditions: I. 0.01 ≤ S1/E ≤ 0.4;II. 0.01 ≤ S2/E ≤ 0.4;III. 0.9 ≤ S2/S1 ≤ 1.1;IV. 1 mm ≤ T11 ≤ 30 mm; or V. 1 mm ≤ T12 ≤ 30 mm.

9. The electrode sheet according to any one of claims 1 to 8, wherein the tab region is used for accommodating at least one tab assembly, and the tab assembly comprises at least one of a tab and a protective adhesive; and the number of tab regions on the same electrode sheet is at least one, and an area of each tab region is denoted as M, M satisfying 0.01 ≤ M/E ≤ 0.2.

10. The electrode sheet according to claim 9, wherein the number of tab regions on the same electrode sheet is multiple, wherein the tab region comprises a tab mounting region and a protective adhesive mounting region, the tab mounting region being used for accommodating a tab, and the protective adhesive mounting region being used for accommodating a protective adhesive; an area of the tab mounting region is denoted as B, and an area of the protective adhesive mounting region is denoted as C; and the electrode sheet satisfies at least one of the following conditions: a. 0.01 ≤ B/E ≤ 0.2; or b. 0.01 ≤ C/E ≤ 0.2.

11. The electrode sheet according to claim 9, wherein the tab region is spaced from the fourth boundary; or, the tab region extends from the third boundary through the protruding point region along the width direction of the electrode sheet.

12. The electrode sheet according to any one of claims 1 to 11, wherein the electrode sheet is configured to be wound with a separator along the length direction of the electrode sheet for multiple turns to form an electrode body; each turn of the electrode sheet comprises a straight segment and corner segments disposed at both ends of the straight segment; and in the length direction of the electrode sheet, a dimension of the corner segment is denoted as W5, and a dimension of the protruding point region is denoted as W6; wherein the protruding point region is disposed at the corner segment, wherein W6 = W5; or, the protruding point region is disposed at the corner segment and extends to the straight segment, and two protruding point regions of a same turn of the electrode sheet are spaced from each other, wherein W6 > W5.

13. The electrode sheet according to any one of claims 1 to 12, wherein the electrode sheet comprises a current collector and an active material layer; and the current collector comprises a main body portion and a blank foil portion, wherein the blank foil portion is integrally formed with the main body portion, multiple tabs are formed on the blank foil portion, the active material layer is disposed on a surface of the main body portion, and a surface of the active material layer facing away from the main body portion forms the first surface.

14. The electrode sheet according to any one of claims 1 to 13, wherein the electrode sheet comprises a current collector and an active material layer, the active material layer being disposed on a surface of the current collector; and the first protruding portion is formed by bending a portion of the current collector and a portion of the active material layer toward a same side, the portion of the current collector used to form the first protruding portion being a protruding portion base, the protruding portion base having a first outer peripheral edge line, and the first outer peripheral edge line having a first circumscribed circle; two adjacent protruding portion bases have a first spacing L1 and a second spacing L2, the first spacing L1 being a distance in the length direction of the electrode sheet between centers of the first circumscribed circles of the first outer peripheral edge lines of the two adjacent protruding portion bases, and the second spacing L2 being a distance in the width direction of the electrode sheet between centers of the first circumscribed circles of the first outer peripheral edge lines of the two adjacent protruding portion bases; and
L1 satisfies: 0.5 mm ≤ L1 ≤ 40 mm; and/or, L2 satisfies: 0.5 mm ≤ L2 ≤ 40 mm.

15. An electrode assembly, comprising multiple tab assemblies, the electrode sheet according to any one of claims 1 to 14, and a separator disposed between two electrode sheets, wherein the separator and two such electrode sheets are wound along the length direction of the electrode sheet to form a flat electrode body.

16. The electrode assembly according to claim 15, wherein the tab assembly comprises a tab and a protective adhesive, the tab comprising a connecting segment connected to the electrode sheet and a mating segment extending beyond an edge of the electrode sheet, and a surface of the connecting segment facing away from the electrode sheet is provided with multiple second protruding portions.

17. A battery comprising: a housing; and the electrode assembly according to claim 15 or 16, wherein the electrode assembly is disposed in an internal space of the housing.
